(19) Europäisches Patentamt
European Patent Office
Office européen des brevets

(11) EP 3 922 523 A1

(12) EUROPEAN PATENT APPLICATION

(43) Date of publication:
**15.12.2021 Bulletin 2021/50**

(21) Application number: **21177853.5**

(22) Date of filing: **04.06.2021**

(51) Int Cl.:
***B60W 30/06*** *(2006.01)*
***G06T 7/73*** *(2017.01)*
***G06T 7/246*** *(2017.01)*
***G01C 21/14*** *(2006.01)*
***G01C 21/28*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2020 JP 2020099244**

(71) Applicant: **Faurecia Clarion Electronics Co., Ltd.**
**Saitama-shi, Saitama 330-0081 (JP)**

(72) Inventors:
- **SAKAI, Takahiro**
  **Tokyo 100-8280 (JP)**
- **SAKANO, Morihiko**
  **Tokyo 100-8280 (JP)**

(74) Representative: **Lavoix**
**Bayerstraße 83**
**80335 München (DE)**

# (54) SELF-POSITION ESTIMATION DEVICE

(57) A self-position estimation device (10, 10a) is configured to estimate a position and a posture of an own vehicle moving in a route to a target point, the device (10) includes an image information calculator (11) configured to sequentially acquire an image photographed in a predetermined period by a camera mounted on the own vehicle, to extract a characteristic from the image, and to associate the characteristic with a characteristic of an image acquired in a previous period, a scale estimator (12) configured to acquire vehicle information required for calculating a moving distance of the own vehicle, and to estimate the moving distance between acquiring times of two images of the images, and a position and posture estimator (13) configured to estimate the position and the posture of the own vehicle based on the moving distance estimated by the scale estimator (11) and a positional relationship of the characteristic, which is associated by the image information calculator (11), in the image.

FIG.1

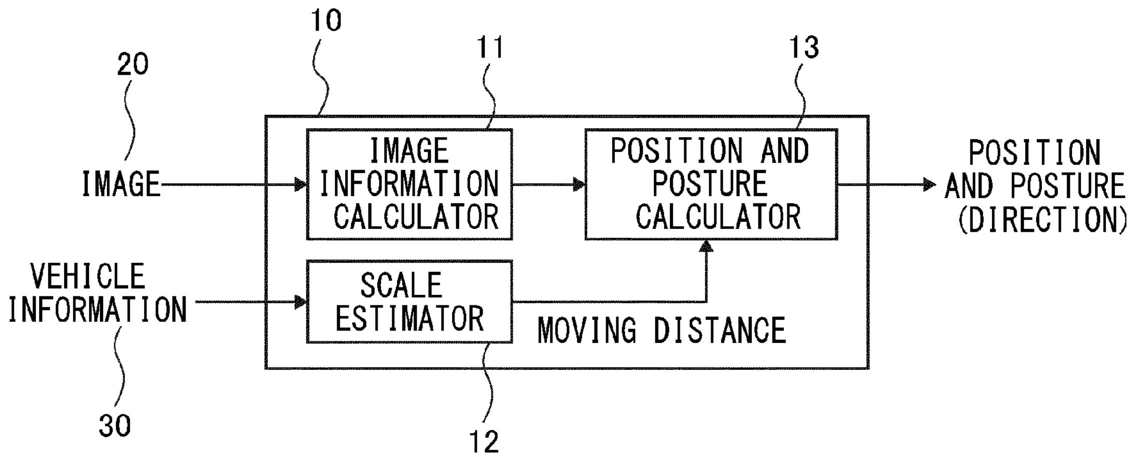


EP 3 922 523 A1

## Description

### TECHNICAL FIELD

This disclosure relates to a self-position estimation device.

### BACKGROUND

An automatic parking system has been proposed. The automatic parking system is configured to designate a parking position, to set a route from a present position of an automobile or the like to a designated parking position, and to autonomously move the automobile without a driving operation by a driver. The automatic parking system is required to estimate a position of a traveling automobile with high accuracy, in order to accurately and autonomously move the automobile in accordance with the route to the parking position.

The presently known automatic parking system has an effort of estimating a self-position with high accuracy by using an external recognition sensor such as a camera in addition to dead reckoning with vehicle information such as a vehicle speed and a steering angle of a steering wheel.

Although a camera is more inexpensive than a Light Detection and Ranging (LiDAR), for example, the photographed image by the camera can provide only two-dimensional information. For this reason, a size of an object in the photographed image is varied, and a technique of estimating a self-position by tracking the object in the photographed image causes a significant error in an estimation result of a moving distance.

A three-dimensional position estimation device is taught in JP2014-142241A, for example. The three-dimensional position estimation device is configured to estimate a real position of a characteristic in a photographed image based on a plurality of photographed images sequentially photographed with a photographing part that moves along movement of a moving object, with respect to estimation of a self-position with a photographed image and vehicle information.

This three-dimensional position estimation device includes a characteristic association means of extracting at least one characteristic in the above-described plurality of photographed images, and of associating the characteristic among a plurality of photographed images, a behavioral information acquiring means of acquiring behavioral information on a behavior of a moving object, a movement calculation means of calculating a movement of a moving object (moving object movement) while photographing a plurality of photographed images based on the behavioral information, a real position estimation means of estimating a real position based on the moving object movement and the movement of the characteristic among a plurality of photographed images, a movement correction means of detecting a difference with an extracted position representing a position on a photographed image when reprojecting the real position onto any of the photographed images, and of correcting the moving object movement to reduce the difference, and a corrected real position estimation means of estimating the real position based on the movement of the characteristic in a plurality of photographed images and the corrected moving object movement.

An automatic parking system including long distance traveling such as valet parking requires a plurality of turning operations and a plurality of steering operations according to a positional relationship between a parking position and a peripheral obstacle. For this reason, the automatic parking system is required to acquire a direction and a position of an own vehicle with high accuracy, in order to accurately move the own vehicle to the parking position.

However, when the technique disclosed in JP2014-142241A is applied to such an automatic parking system, scale drift in which scale errors are gradually accumulated may occur when restoring in a three-dimensional position. This drawback arises from the calculation of a final vehicle position and posture with the image information in the technique disclosed in JP2014-142241A.

More specifically, although the technique disclosed in JP2014-142241A executes the process with a translation vector and a rotation matrix calculated based on the vehicle information acquired from the moving object as an initial position, the technique disclosed in JP2014-142241A cannot avoid the occurrence of the scale drift because the technique executes an optimization process with information obtained from an image finally.

### SUMMARY

The present disclosure has been made in view of the above circumstances, and an object of this disclosure is, therefore, to provide a self-position estimation device capable of estimating a self-position with high accuracy by using a moving distance calculated based on the information acquired from a moving object as a fixed value.

An embodiment of a self-position estimation device described in this disclosure is configured to estimate a position and a posture of a moving object moving in a route to a target point. The self-position estimation device includes an image information calculator configured to sequentially acquire an image photographed in a predetermined period by an imaging device mounted on the moving object, to extract a characteristic from the image, and to associate the characteristic with a characteristic of an image acquired in a previous period, a scale estimator configured to acquire vehicle information required for calculating a moving distance of the moving object, and to estimate the moving distance between acquiring times of two images of the images, and a position and posture estimator configured to estimate the position and the posture of the moving object in the route based on the moving distance estimated by the scale estimator and a positional relationship of the characteristic, which is associated by the image information calculator, in the image.

## EFFECT OF THE INVENTION

According to a self-position estimation device of the present disclosure, a self-position can be estimated with high accuracy by using a moving distance calculated based on information acquired from a moving object as a fixed value.

## BRIEF DESCRIPTION OF DRAWINGS

FIG. 1 is a block diagram showing a configuration of a self-position estimation device as one embodiment of this disclosure. FIG. 2 is a flowchart showing a flow of an entire process by the self-position estimation device in a first embodiment illustrated in FIG. 1. FIG. 3 is a view showing a relationship between an image characteristic and an epipolar line. FIG. 4 is a view showing one example of an error in an estimated position of an associated image characteristic, which is solved by the self-position estimation device in the first embodiment. FIG. 5 is a view showing a vehicle coordinate system for use in representation of a position and a posture of an own vehicle by the self-position estimation device. FIG. 6 is a view showing a sensor coordinate system for use in representation of an attachment position and a posture of a camera as a sensor by the self-position estimation device. FIG. 7 is a view showing a configuration of a self-position estimation device in a second embodiment. FIG. 8 is a view showing a delay of a timing reflecting a positional posture by a process time. FIG. 9 is a flowchart showing a flow of an entire process of the self-position estimation device of the second embodiment. FIG. 10 is a view showing an error of a moving distance caused by a data acquiring period. FIG. 11 is a view showing a relationship among an acquiring time of vehicle information, an acquiring time of an image, and a timing of an estimation process of a position and a posture.

## DETAILED DESCRIPTION

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.

Hereinafter, embodiments of a self-position estimation device according to this disclosure will be described with reference to the drawings.

### First Embodiment

FIG. 1 is a block diagram showing a configuration of a self-position estimation device 10 according to one embodiment of this disclosure. The shown self-position estimation device 10 is mounted on a moving body such as a passenger vehicle, and is used in combination with an automatic parking system.

However, the self-position estimation device according to this disclosure is not limited to the combination with the automatic parking system, and may not be combined with the automatic parking system.

The self-position estimation device 10 may be applied to a vehicle other than a passenger vehicle and a moving body other than the vehicle, for example, a construction machine having a travelable traveling body without being limited to the passenger vehicle as the moving body.

Hereinafter, the moving body on which the self-position estimation device 10 is mounted is referred to as an "own vehicle". The self-position estimation device 10 periodically operates in a predetermined period, for example, 100 milliseconds (ms). The self-position estimation device 10 includes a mechanism of acquiring vehicle information 30 such as a speed, a steering angle of a steering wheel (rotation angle from neutral position of steering wheel), a shift position, and a brake (braking system) condition from the own vehicle, and a mechanism of acquiring an image 20 photographed by a camera attached to the own vehicle.

As shown in FIG. 1, the self-position estimation device 10 includes, as its mechanisms, an image information calculator 11, a scale estimator 12, and a position and posture calculator 13. The self-position estimation device 10 includes a CPU, a GPU, a RAM, and a ROM, and executes a calculation process of the CPU by developing, on the RAM, a predetermined program stored in the ROM to achieve these mechanisms. The self-position estimation device 10 may be configured to achieve a part or all of the mechanisms by a hardware such as an FPGA and an ASIC.

The self-position estimation device 10 receives an image 20 photographed by the camera attached to the own vehicle and vehicle information 30 acquired via a CAN from the own vehicle. The image 20 is sequentially photographed by the camera at a predetermined frame rate. The vehicle information 30 is information on the movement of the own vehicle acquired from the own vehicle and information equivalent to the information on the movement, for example, a vehicle speed, a steering angle of a steering wheel, a vehicle turning radius, accelerator and brake conditions, and a shift lever position (condition). Similar to the image 20, the vehicle information 30 is also sequentially acquired at a predetermined frame rate.

The image information calculator 11 extracts a coordinate of a characteristic point (characteristic) as an image such as a corner (corner portion) of a building in the image 20, and associates the coordinate with a coordinate of a characteristic extracted from another image 20 received in the past. The image information calculator 11 outputs information on a position (coordinate) of the extracted characteristic and a position (coordinate) of the associated past characteristic to the position and posture calculator 13.

The scale estimator 12 estimates a moving distance of the own vehicle in a real space based on the vehicle information 30. The moving distance can be estimated based on the vehicle speed (based on pulse (corresponding to rotation speed) generated according to rotation of tire) and the rotation amount of a tire, for example. The scale estimator 12 outputs the estimated moving distance to the position and posture calculator 13.

The position and posture calculator 13 calculates a candidate of a moving route from a previously stored motion property of the own vehicle based on the moving distance estimated by the scale estimator 12. The position and posture calculator 13 sets the position and the posture having the highest consistency in the candidates of the moving routes by using the past information on the characteristic, which is associated with the characteristic calculated by the image information calculator 11, as the position and the posture of the own vehicle. The set position and posture of the own vehicle are output to a latter system, for example, an automatic parking system. The process content of the position and posture calculator 13 will be described later in detail.

Next, the process executed by the self-position estimation device 10 will be described with reference to the flowchart. FIG. 2 is the flowchart showing the flow of the entire process by the self-position estimation device 10 in the first embodiment shown in FIG. 1. FIG. 3 is a view showing a relationship between an image characteristic and an epipolar line. FIG. 4 is a view showing one example of an error in an estimated position of an associated image characteristic, which is solved by the self-position estimation device 10 in the first embodiment.

Prior to the description of FIG. 2, the coordinate system for use in the process of the self-position estimation device 10 will be described. FIG. 5 is a view showing a vehicle coordinate system for use in the representation of the position and the posture of the own vehicle by the self-position estimation device 10. FIG. 6 is a view showing a sensor coordinate system for use in the representation of the posture and the attachment position of the camera as a sensor by the self-position estimation device 10.

In the vehicle coordinate system illustrated in FIG. 5, with respect to the direction of the own vehicle, the front and back direction is defined as an X axis, the right and left direction is defined as a Y axis, and the up and down direction is defined as a Z axis. The front of the traveling direction of the own vehicle is the positive of the X axis, the left side with respect to the traveling direction of the own vehicle is the positive of the Y axis, and the up direction of the height direction of the own vehicle is the positive of the Z axis. "ROLL", "PITCH", and "YAW" which are the rotation about the respective axes X, Y, Z include the clockwise directions, respectively, as the positive.

In the present embodiment, the rotation amount and the translation amount of the own vehicle are expressed as follows with the vehicle coordinate system in FIG. 5. More specifically, $\theta_{roll}$ is the rotation amount about the X axis, $\theta_{pitch}$ is the rotation amount about the Y axis, $\theta_{yaw}$ is the rotation amount about the Z axis, $x_{car}$ is the translation amount in the X axis direction, $y_{car}$ is the translation amount in the Y axis direction, and $z_{car}$ is the translation amount in the Z axis direction. The rotation amount corresponds to the variation in the posture of the own vehicle, and the translation amount corresponds to the variation in the position of the own vehicle.

In the sensor coordinate system shown in FIG. 6, when the camera is seen from the upright direction, the right and left direction is defined as the X axis, the up and down direction is defined as the Y axis, and the optical axis direction of the photographing part of the camera is defined as the Z axis. In this case, the right direction of the photographing part is the positive of the X axis, the down direction of the photographing part is the positive of the Y axis, and the photographing direction of the photographing part is the positive of the Z axis. The rotation about the respective axes X, Y, Z includes the clockwise directions, respectively, as the positive.

In the present embodiment, the rotation amount and the translation amount of the camera are expressed as follows with the sensor coordinate system in FIG. 6, and the position and the posture of the camera are expressed with these. More specifically, $\theta_x$ is the rotation amount about the X axis, $\theta_y$ is the rotation amount about the Y axis, $\theta_z$ is the rotation amount about the Z axis, $x_{camera}$ is the translation amount in the X axis direction, $y_{camera}$ is the translation amount in the Y axis direction, and $z_{camera}$ is the translation amount in the Z axis direction. The rotation amount corresponds to the posture of the camera and the translation amount corresponds to the position of the camera.

In the following description, the rotation amounts $\theta_{roll}$, $\theta_{pitch}$, $\theta_{yaw}$ and the translation amounts $x_{car}$, $y_{car}$, $z_{car}$ of the own vehicle in the vehicle coordinate system are respectively calculated in any period based on the vehicle information 30 in the self-position estimation device 10, and the rotation amounts $\theta_x$, $\theta_y$, $\theta_z$ and the translation amounts $x_{camera}$,

$y_{camera}$, $z_{camera}$ of the sensor in the sensor coordinate system are respectively calculated in any period by the position and posture calculator 13 in the self-position estimation device 10.

Next, the flowchart showing the entire process of the self-position estimation device 10 shown in FIG. 2 will be described. The process shown in FIG. 2 starts in synchronization with the starting up timing of the automatic parking system 40 by a user.

In the embodiment shown in the flowchart of FIG. 2, a wide-angle monocular camera attached to the own vehicle is applied. The data (image 20 and vehicle information 30) acquired from the camera and the own vehicle are acquired in a period of 33 ms, for example. The size of the image 20 has 640 pixels in width and 400 pixels in height, for example.

The vehicle information 30 indicates the information required for calculating how the own vehicle has moved. At first, the image information calculator 11 acquires the image 20 photographed by the monocular camera (Step S100), and extracts the image characteristic from the image (S101). The image characteristic is a coordinate of a specified characteristic point such as a corner (corner portion) of a building in the image.

In the present embodiment, the image characteristic is extracted with the known process method a so-called Oriented FAST and Rotated BRIEF (ORB), for example. Instead of the ORB, another process method, for example, a corner point extraction method without description of a characteristic amount such as a Harris corner detection, a Tomasi, and a Features from Accelerated Segment Test (FAST) and a characteristic extraction method such as a SURF and a SIFT may be used. The process method is, therefore, not limited to the ORB.

Next, the image information calculator 11 associates the image characteristic extracted from the latest image with the image characteristic extracted from the image acquired in the previous period (Step S102). In this case, the image characteristics of the same parts of the same subjects are associated to each other among the image characteristics respectively extracted from the photographed images acquired in different timings in time series.

This association is performed by the comparison between the characteristic amounts of the image characteristics and the comparison of the peripheral image pixel values of the image characteristics, for example, to associate the similar characteristics. For example, when the ORB for use in the extraction of the image characteristic in this embodiment is used, the characteristic amounts of the image characteristics can be compared by the exclusive OR of the characteristic amounts described with binary.

With the comparison, the smaller the difference is, the higher the possibility of the characteristics of the same portions of the same subjects becomes. For the corner point detected with the method without the characteristic amount such as the Harris, the image characteristics can be associated by the comparison of the peripheral pixels of the image characteristics such as a Sum of Squared Difference (SSD) and a Kanade-Lucas-Tomasi Feature Tracker (KLT).

When associating the image characteristics (Step S102), the association result to the incorrectly associated image characteristic may be eliminated. For example, the accuracy of the association result of the image characteristics can be confirmed with a known method a so-called crosscheck.

Although the detailed description will be omitted, this method is to compare a result in which one image A is associated with the other image B to a result in which the image B is associated with the image A, and to adapt the common result as the association result of the image characteristics when the common result is acquired. In this case, the two photographed images in which the image characteristics are associated are set to the images A, B, respectively.

Next, the image information calculator 11 corrects a distortion of the image characteristic, which is extracted from the input image and is associated with the image acquired in the previous period (Step S103). The distortion correction is to correct the distortion of the image caused by the distortion of the lens of the camera. A general method includes a Zhang method. The Zhang method estimates a parameter with the least square method.

More specifically, a pair of the known three dimensional coordinate of a calibration board, for example, and the image coordinate of the calibration board in the image is collected, and a parameter to reduce the difference between the image coordinate when projecting the known three dimensional coordinate in the image by a camera model and the associated image coordinate of the calibration board in the image is estimated. The distortion of the camera lens is eliminated by correcting the image characteristic with this parameter, and the highly accurate coordinate of the image characteristic is thereby acquired.

Next, the scale estimator 12 acquires the vehicle information 30 (Step S104) through a Control Area Network (CAN), for example, from the own vehicle. The vehicle information 30 indicates the information required for estimating (calculating) the moving distance (Step S105). The vehicle information 30 is, for example, the speed of the own vehicle and the rotation speed of the tire.

The process of estimating the moving distance is executed with the acquired vehicle information 30. For example, when the method with the rotation speed of the tire is used, the tire diameter of the own vehicle is multiplied by the rotation amount of the tire during the process period. When the method with the vehicle speed is used, for example, the moving distance from the previous process is obtained based on the vehicle speed per one second.

Next, the position and posture calculator 13 repeats a setting and updating process (Step S106) of the position and the posture of the own vehicle, a calculation process (Step S107) of the position and the posture of the own vehicle after the movement, and a calculation process (Step S108) of the error with the image information calculator 11 (Steps S106 to S108).

The position and posture calculator 13 sets the initial value of the posture to be estimated for the optimization process and updates the value (Step S106). Herein, the estimation of the initial value of the posture uses the known method a so-called five-point method capable of estimating from the image information, for example. This five-point method is a posture estimation method which can be used when two images include five or more association points.

However, the five-point method may cause an indefinite scale while the method can estimate the posture with high accuracy. For this reason, the position and posture calculator 13 calculates the position and the posture, which become the initial values, with the posture estimated by the five-point method, the scale (moving distance) estimated by the scale estimator 12, and the model of the vehicle movement in accordance with the following equations (1) to (4). Namely, the position and posture calculator 13 estimates the position and the direction on the x-y plane. Hereinafter, the kinetic model of the own vehicle will be supposed.

$$\rho_t = \frac{1}{R_t} \qquad (1)$$

$$\Delta\theta_{yaw_t} = \Delta S_t \cdot \rho_t \qquad (2)$$

$$\begin{pmatrix} x_{Car\,t} \\ y_{car\,t} \end{pmatrix} = \begin{pmatrix} x_{car\,t-1} \\ y_{car\,t-1} \end{pmatrix} + \Delta S_t \begin{pmatrix} \cos\left(\theta_{yaw\,t-1}\right) \\ \sin\left(\theta_{yaw\,t-1}\right) \end{pmatrix} \qquad (3)$$

$$\theta_{yaw\,t} = \theta_{yaw\,t-1} + \Delta\theta_{yaw\,t} \qquad (4)$$

Where, R is a turning radius calculated from a steering angle of a steering wheel, p is a curvature, $\theta_{yaw}$ is a direction of an own vehicle, S is a moving distance of an own vehicle, $x_{car}$, $y_{car}$ are a coordinate on the vehicle coordinate, and t is a time. Herein, $\Delta\theta_{yawt}$ corresponding to the temporal variation of the direction of the own vehicle is estimated.

In this embodiment, $\Delta\theta_{yawt}$ corresponding to the temporal variation of the direction of the own vehicle is updated with a Levenberg-Marquardt Method which is one type of repetition methods. In addition, the value may be updated with a Gaussian Newton method which is another repetition method.

The position and posture calculator 13 converts the results of the equations (3), (4) into a matrix format representing the position and the posture on the camera coordinate system (Step S107). At first, the results of the equations (3), (4) are converted into the matrix format representing the position and the posture on the vehicle coordinate system with the equation (5). Next, the position and the posture on the vehicle coordinate system are converted into the position and the posture on the camera coordinate system with the equation (6).

Where, Posecart is a matrix representing the position and the posture on the vehicle coordinate at a time t, $Pose_{camerat}$ is a matrix representing the position and the posture on the camera coordinate at the time t, and $A^{car}_{camera}$ is a conversion matrix that converts the value from the vehicle coordinate system to the camera coordinate system.

$$\boldsymbol{Pose}_{car_t} = \begin{pmatrix} \cos\left(\theta_{yaw_t}\right) & -\sin\left(\theta_{yaw_t}\right) & 0 & x_{Car\,t} \\ \sin\left(\theta_{yaw_t}\right) & \cos\left(\theta_{yaw_t}\right) & 0 & y_{Car\,t} \\ 0\ \ 0 & & 1 & 0 \\ 0\ \ 0 & & 0 & 1 \end{pmatrix} \qquad (5)$$

$$Pose_{camera_t} = Pose_{car_t} \cdot A_{camera}^{car} \quad (6)$$

The position and posture calculator 13 calculates, in Step 108 (S108), the error in Step 107 (S107) with the result of Step 107 (S107) and the result of Step 103 (S103). This embodiment shows a method using a distance between the image characteristic and the epipolar line calculated with a basic matrix shown in the following equation (9) as the error.

By the movement of the camera along the movement of the own vehicle, the image characteristic and the epipolar line include therebetween the relationship shown in FIGS. 3, 4. FIG. 3 shows the relationship between the characteristic and the epipolar line when $\Delta\theta_{yawt}$ corresponding to the temporal variation of the direction of the own vehicle is accurately acquired, and FIG. 4 shows the relationship between the characteristic and the epipolar line when $\Delta\theta_{yawt}$ corresponding to the temporal variation of the direction of the own vehicle includes an error.

In the event that $\Delta\theta_{yawt}$ corresponding to the temporal variation of the direction of the own vehicle is accurately acquired, when a straight line (light beam) connecting the camera origin and the image characteristic of the image in the position $Pose_{camerat-1}$ of the camera at the previous time (time t-1) is projected onto another image (in the position $Pose_{camerat}$ of the camera at the time t), the image characteristic corresponding to the movement $Pose_{ref}$ between the cameras exists on the projected straight line (epipolar line).

On the other hand, when $\Delta\theta_{yawt}$ corresponding to the temporal variation of the direction of the own vehicle includes an error, as the movement $Pose_{ref}$ between the cameras includes an error as shown in FIG. 4 (movement $Pose'_{ref}$ between cameras which cause error), the epipolar line projected in the image in the position $Pose'_{camerat}$ including the error at the time t and the associated image characteristic include therebetween an error, as shown in FIG. 4. Accordingly, the error of $\Delta\theta_{yawt}$ corresponding to the temporal variation of the direction of the own vehicle can be solved by acquiring $\Delta\theta_{yawt}$ corresponding to the temporal variation of the direction of the own vehicle, which solves the error between the epipolar line and the image characteristic.

The position and posture calculator 13 calculates the movement from the position and the posture on the camera coordinate at the previous time t-1 with the equation (9). Next, a Skew matrix is calculated with the translation component of the calculated movement between the times t-1, t. The basic matrix is calculated with the Skew matrix, the inside parameter of the camera, and the camera movement between the times t-1, t.

Where, Skew is a Skew matrix calculated from the translation component of $Pose_{ref}$, $C_{intrinsic}$ is an inside parameter of the camera such as a focal length and an image center, and $F_{t-1,t}$ is a basic matrix calculated from the camera movement between the times t-1, t.

$$Pose_{ref} = \left(Pose_{camera_t}\right)^{-1}\left(Pose_{camera_{t-1}}\right) \quad (7)$$

$$Skew = \begin{pmatrix} 0 & -z_{ref} & y_{ref} \\ z_{ref} & 0 & -x_{ref} \\ -y_{ref} & x_{ref} & 0 \end{pmatrix} \quad (8)$$

$$F_{\mathrm{t-1,t}} = C_{\mathrm{intrinsic}}^{-t} S_{kew} R_{ref} C_{intrinsic}^{t} \quad (9)$$

Next, the position and posture calculator 13 calculates the epipolar line with the characteristic and the basic matrix calculated with the equation (9), and calculates the distance between the epipolar line and the associated characteristic with the following equations (10) to (14). The distance between the epipolar line and the characteristic is calculated for both of the distance in the direction from the time t to the time t-1 and the distance in the direction from the time t-1 to the time t.

S in the equation (14) is the number of characteristics. The position and posture calculator 13 sets the total of the square of the distances between all image characteristics and the epipolar line as the error (Step S108).

The purpose of the repetition process from the above-described Step 106 (S106) to Step 109 (S109) is to estimate $\Delta\theta_{yawt}$ corresponding to the temporal variation of the direction of the own vehicle in which the error is minimized. Where, K is an epipolar line, D is a distance between the characteristic and the epipolar line K, Pt is a position of the characteristic in the image, and Residuals is an error calculated from the image characteristic and the epipolar line K.

$$\boldsymbol{K}_t = \begin{pmatrix} a_t \\ b_t \\ c_t \end{pmatrix} = \boldsymbol{F}_{\mathrm{t-1,t}}\, \boldsymbol{Pt}_{t-1} \qquad (10)$$

$$D_t = \frac{\boldsymbol{K}_t \boldsymbol{Pt}_t}{\sqrt{a_t * a_t + b_t * b_t}} \qquad (11)$$

$$\boldsymbol{K}_{t-1} = \begin{pmatrix} a_{t-1} \\ b_{t-1} \\ c_{t-1} \end{pmatrix} = \boldsymbol{F}_{t-1,t}^{t}\, \boldsymbol{Pt}_t \qquad (12)$$

$$D_{t-1} = \frac{\boldsymbol{K}_{t-1} \boldsymbol{Pt}_{t-1}}{\sqrt{a_{t-1} * a_{t-1} + b_{t-1} * b_{t-1}}} \qquad (13)$$

$$R_{esiduals} = \sum_{i=1}^{S} \left\{ \left(D_{t_i}\right)^2 + \left(D_{t-1_i}\right)^2 \right\} \qquad (14)$$

The position and posture calculator 13 determines the end of the repetition process in Step 109 (S109). In this embodiment, three end conditions of the repetition process are set. The first condition is a condition according to the size of the error. When the size of the error calculated from the distance between the characteristic and the epipolar line lowers a previously set threshold, namely, when the error is smaller than the threshold, the repetition process ends.

The second condition is a condition regarding the variation of $\Delta\theta_{yawt}$ corresponding to the temporal variation of the direction of the own vehicle. Namely, when the variation of the value of $\Delta\theta_{yawt}$ lowers a previously set threshold after the comparison to $\Delta\theta_{yawt}$ in the previous period of the repetition process, the repetition process ends.

The third condition is a condition regarding the upper limit number of the repetition process. The number of repetition processes is counted, and the repetition process ends when the counted number of repetition processes reaches a predetermined set threshold.

When any one of the three conditions is satisfied, the process proceeds to Step 110 (S110) which is the next process of the repetition process (S106 to S108). When none of the three conditions is satisfied, the repetition process continues.

The position and posture calculator 13 which has ended the repetition processes outputs the movement of the own vehicle calculated by the repetition process to another system (S110). In this embodiment, as the movement of the own vehicle on the camera coordinate is estimated, the movement is converted into the position and the posture on the vehicle coordinate with the following equation (15) when the movement is output to another system. Where, $A^{camera}_{car}$ is a conversion matrix from the camera coordinate to the vehicle coordinate.

$$\boldsymbol{Pose}_{car_t} = \boldsymbol{Pose}_{camera_t} \cdot \boldsymbol{A}_{car}^{camera} \qquad (15)$$

Modified Example of First Embodiment

The self-position estimation device of the above-described first embodiment may be used in combination with a Global Positioning System (GPS) (or Global Navigation Satellite System (GNSS)). More specifically, in an environment with a sky over the own vehicle opened, the position and the posture of the own vehicle can be calculated by the GPS without calculating the position and the posture of the own vehicle by the self-position estimation device. The position and the posture can be thereby calculated with high accuracy.
However, in an environment, which cannot receive a GPS signal, such as a multistory parking space and an underground car park, the GPS cannot be used. In this case, the position and the posture of the own vehicle can be calculated by the self-position estimation device according to this disclosure.
Namely, the self-position estimation device 10 determines of which a self-position estimation result is used between the self-position estimation result estimated by the self-position estimation device 10 of the first embodiment and the self-position estimation result estimated based on the received GPS signal, and outputs the more appropriate self-position estimation result, which has been selected by the determination, to the automatic parking system 40.
The self-position estimation device 10 can determine whether or not it is possible to receive the GPS signal based on the number of received GPS signals, namely, the number of satellites corresponding to the GPS signal and the standard deviation of the position and the posture to be calculated.
When the self-position is calculated based on the GPS signal sent from each satellite, it is necessary to receive the GPS signal from four or more satellites. When the GPS signals cannot be received from four or more satellites, the number of satellites which is first condition of the determination is not met. In this case, the position and the posture estimated by the self-position estimation device 10 of the first embodiment are therefore output to the automatic parking system 40.
The standard deviation of the position and the posture which is the second condition of the determination indicates the variation in the position and the posture calculated by the GPS signals. This condition cannot be uniquely defined because a required accuracy differs according to a latter process. As a condition for performing the automatic parking, the standard deviation $\sigma_x$, $\sigma_y$ of the position can be set to, for example, 10 cm or below and the standard deviation $\sigma_{yaw}$ of the posture can be set to, for example, 1° in view of the fact that the own vehicle is parked within a white line of a parking lot, for example.

Second Embodiment

FIG. 7 is a view showing an embodiment (hereinafter, second embodiment) when the self-position estimation device of this disclosure is incorporated as a part of the mechanism of the camera ECU 40 in the automatic parking system. When the self-position estimation device is used as a part of another onboard system, the acquiring period and timing of the vehicle information 30 and the image 20 may differ according to the request of the system.
In this case, the moving distance may include an error due to the difference in the acquiring period of each data. When the moving distance includes an error, a precondition which can accurately estimate the moving distance is lost, so that the posture of the own vehicle cannot be estimated with high accuracy.
It is therefore necessary to solve this problem. However, in the first embodiment, as illustrated in FIG. 8, because it takes a time to calculate the self-position and the self-posture of the own vehicle, this requirement may not be met.
In this case, the underlying self-position and self-posture are calculated with a dead reckoning method which can calculate at a high speed, and the dead reckoning is corrected by the self-position estimation device of the embodiment to estimate the position and the posture with high accuracy.
FIG. 7 is a block diagram showing a self-position estimation device 10a of the second embodiment, which is mounted on a moving body such as a passenger vehicle, and operates as a part of the automatic parking system 40, similar to the self-position estimation device 10 illustrated in FIG. 1.
In the second embodiment, as illustrated in FIG. 8, the acquiring period of the vehicle information 30 is 20 ms, the acquiring period of the image 20 is 33 ms, and the execution period of the self-position estimation by the self-position estimation device is 99 ms. The second embodiment includes a mechanism of acquiring the vehicle information 30 such as a speed, a steering angle of a steering wheel, and conditions of a shift and a brake from the own vehicle and a mechanism of acquiring the image 20 photographed by the camera.
As illustrated in FIG. 7, the self-position estimation device 10a includes, as its mechanisms, an image information calculator 11, a scale estimator 12, a position and posture calculator 13, a time difference calculator 14, a scale corrector 15, and a position and posture estimation result verification part 16. The self-position estimation device 10a includes a CPU, a GPU, a RAM, and a ROM, and can achieve these mechanisms by developing, on the RAM, a predetermined program stored in the ROM to be executed by the CPU.
A part or all of the mechanisms of the self-position estimation device 10 may be achieved with a hardware such as an FPGA and an ASIC.

The self-position estimation device 10a receives the image 20 acquired by a camera attached to the own vehicle and the vehicle information 30 acquired from the own vehicle via a CAN. The image 20 is sequentially acquired at a predetermined frame rate by the camera attached to the own vehicle.

The vehicle information 30 indicates information regarding the movement of the own vehicle acquired from the own vehicle and the equivalent information, for example, a speed of the own vehicle, a steering amount of a steering wheel, a turning radius of the own vehicle, conditions of an acceleration and a brake, and a condition (position) of a shift lever. The vehicle information 30 is sequentially acquired at a predetermined frame rate similar to the image 20.

As the process contents of the image information calculator 11, the scale estimator 12, and the position and posture calculator 13 are the same as those in the first embodiment, the description thereof will be omitted. The process content of the time difference calculator 14 will be described.

The time difference calculator 14 calculates a correction amount to be input to the scale corrector 15 based on the difference in the acquiring period of the vehicle information 30 and the image 20 to be input. The error of the moving distance due to the difference in the acquiring period will be described with reference to FIG. 10.

The system of the second embodiment acquires the vehicle information 30 in a period of 20 ms, for example, and the image 20 in a period of 33 ms, for example, and performs the estimation process of the position and the posture in a period of 99 ms, for example. For example, the estimation of the position and the posture operates in a timing of a time t.

In this case, the movement from the time t-1 to the time t is estimated by the estimation process of the position and the posture. In this case, the image 20 which can be used for the estimation process of the position and the posture is an image acquired at the time t-1 and an image acquired after 99 ms of the time t-1, for example.

On the other hand, the vehicle information 30 is the vehicle information 30 acquired at the time t-1 and the vehicle information 30 acquired after 80 ms of the time t-1, for example. In this case, the vehicle information 30 and the image 20 include the time difference of 19 ms. As the scale information required for the estimation process of the position and the posture has only the moving distance for 80 ms in the system with respect to the moving distance during 99 ms, the scale (moving distance) includes the error.

The scale corrector 15 calculates the time difference in the acquiring of each data to calculate the correction amount with the following equation (16), in order to solve this error by interpolation.

Where, $timestamp_{carinfo}$ is an acquiring time of the vehicle information 30, $timestamp_{image}$ is an acquiring time of the image 20, and c_scale is the correction amount.

$$c_scale = \frac{(2 * timestamp_{carInfo} - timestamp_{image})}{timestamp_{carInfo}} \quad (16)$$

The scale corrector 15 multiplies the moving distance estimated by the scale estimator 12 with the correction amount calculated based on the difference in the acquiring time of the vehicle information 30 and the image 20 calculated by the time difference calculator 14 to correct the moving distance by the calculation of the linear interpolation to coincide with the time interval that has acquired the image 20. The information of the corrected moving distance is output to the position and posture calculator 13.

The position and posture estimation result verification part 16 verifies the position and the posture estimated by the position and posture calculator 13. The position and posture estimation result verification part 16 performs the verification by confirming the meeting of the two conditions.

The first condition is to confirm the error calculated based on the distance between the epipolar line and the image characteristic calculated by the position and posture calculator 13 is a previously set error or below and the error is converged.

Another condition is to confirm the direction of the vehicle is changed in the same direction and the change does not have a large difference by the comparison to the steering amount of the steering wheel acquired from the vehicle information 30.

When a significant change is not confirmed, for example, it may be assumed that the error due to slip is extremely small at a speed for the automatic parking, so that the difference can be about 5 % in view of the error due to a wheel friction and the error due to a tire air pressure change. Accordingly, when the difference with the change in the vehicle direction calculated based on the steering amount of the steering angle is within 5%, the position and the posture can be calculated with high accuracy by the position and posture calculator 13 in consideration of a kinetic model.

The change in the direction of the own vehicle calculated based on the steering amount of the steering wheel can be calculated based on the steering amount of the steering wheel and the moving distance. After the verification, when the above conditions are met, the self-position estimation result is output to a position and posture estimation result integrator 18.

The position and posture estimator 17 calculates the position and the posture of the own vehicle based on the change in the position (movement) and the direction of the own vehicle calculated based on the rotation speed of the tire and the steering amount of the steering wheel as the vehicle information 30 acquired in the period of 20 ms.

The method of calculating the position and the posture of the own vehicle based on the movement calculated based on the rotation speed of the tire and the steering amount of the steering wheel assumes the kinetic model of the own vehicle as described below. Namely, the position and the direction of the vehicle on the x-y plane are estimated.

Where, R is a turning radius calculated based on the steering angle of the steering wheel, p is a curvature, $\theta_{yaw}$ is a direction of the own vehicle, s is a moving distance of the own vehicle, $x_{car}$ and $y_{car}$ are a coordinate in the vehicle coordinate, and t is a time. In the second embodiment, the position and the posture of the own vehicle are calculated with the above-described vehicle kinetic model. However, the method of calculating the position and the posture of the own vehicle is not limited to the method with the above-described vehicle kinetic model.

The position and posture estimation result integrator 18 integrates the estimated self-position and self-posture with the position and the posture (self-position and self-posture) of the own vehicle calculated in the period of 20 ms by the position and posture estimator 17 and the image information acquired in the period of 33 ms by the position and posture estimation result verification part 16.

A method of integrating the self-position and self-posture with the self-position and self-posture calculated in the period of 20 ms by the position and posture estimator 17 as a standard is shown in FIG. 11.

The changes in the position and the posture calculated based on the image 20 are as shown in the image acquiring periods (between image 1 and image 2 and between image 2 to image 3 in FIG. 11). However, as the calculation method with the image 20 takes a time longer than that of the estimation method with the vehicle information 30 only, the delay for the process time occurs.

Accordingly, it is necessary to integrate the self-position and the self-posture in view of these. A time stamp at a time of acquiring each of the vehicle information 30 and the image 20 for use in the position and posture estimation is acquired.

When the estimation result of the position and the posture in each range is output, and the self-position and the self-posture are integrated, the self-position and the self-posture estimated during the corresponding images such as an integration range 1 (image 1 to image 2) and an integration range 2 (image 2 to image 3) illustrated in FIG. 11 are integrated with the self-position and the self-posture calculated in the past based on the vehicle information 30 only with the time stamp showing the time of acquiring each data as a standard.

FIG. 9 is the flowchart showing the entire process in the self-position estimation device 10a in the second embodiment. In this case, as S200 to S204, S206, S209 to S213 are the same steps as S100-S104, S105, S106-S110 in the first embodiment, the detailed description thereof will be omitted.

In Step 205 (S205) (initial position and posture calculation), the process of the self-position estimation device 10a starts based on the vehicle information 30 acquired after the start of the automatic parking system 40 on which the self-position estimation device 10a is mounted. The process in S205 is a process of calculating the position and the posture (initial position and posture) after the start of the acquiring of the image 20. The flowchart in the first embodiment illustrated in FIG. 2 does not include this process, but may include this process.

Step 207 (S207) (acquiring time difference calculation) and Step 208 (S208) (correction of moving distance by acquiring time difference) are performed by the time difference calculator 14 and the scale corrector 15 after estimating (calculating) the moving distance by the scale estimator 12 (S206).

Although the embodiments of the self-position estimation device according to the present disclosure have been described, the self-position estimation device according to the present disclosure should not be limited the embodiments and the modified example. For example, it is not necessary to include all of the configurations of the self-position estimation device in the embodiments and the modified example. A configuration of another embodiment may be added to the described configuration as an embodiment and a modified example. A part of the configuration may be added, deleted, or exchanged as an embodiment and a modified example.

## Claims

**1.** A self-position estimation device (10, 10a) configured to estimate a position and a posture of a moving object moving in a route to a target point, the device comprising:

an image information calculator (11) configured to sequentially acquire an image (20) photographed in a predetermined period by an imaging device mounted on the moving object, to extract a characteristic from the image, and to associate the characteristic with a characteristic of an image acquired in a previous period;

a scale estimator (12) configured to acquire vehicle information (30) required for calculating a moving distance of the moving object, and to estimate the moving distance between acquiring times of two images of the images;

and
a position and posture estimator (13) configured to estimate the position and the posture of the moving object in the route based on the moving distance estimated by the scale estimator and a positional relationship of the characteristic, which is associated by the image information calculator (11), in the image.

**2.** The self-position estimation device according to claim 1,
wherein the vehicle information (30) required for calculating the moving distance of the moving object is information on a pulse generated according to rotation of a tire of the moving object or a rotation amount of the tire, and
wherein the scale estimator (12) is configured to estimate the moving distance of the moving object based on the vehicle information (30) required for calculating the moving distance of the moving object.

**3.** The self-position estimation device according to claim 1, wherein the position and posture estimator (13) is configured to estimate the position and the posture of the moving object having a highest consistency based on the moving distance estimated by the scale estimator (12) in a plurality of routes calculated with a kinetic model of the moving object and the positional relationship of the characteristic, which is associated by the image information calculator (11), in the image.

**4.** The self-position estimation device according to any one of claims 1 to 3, wherein when the image (20) and the vehicle information (30) are acquired at different acquiring timings, the moving distance estimated based on the vehicle information (30) is corrected according to the acquiring time of the image (20).

FIG.1

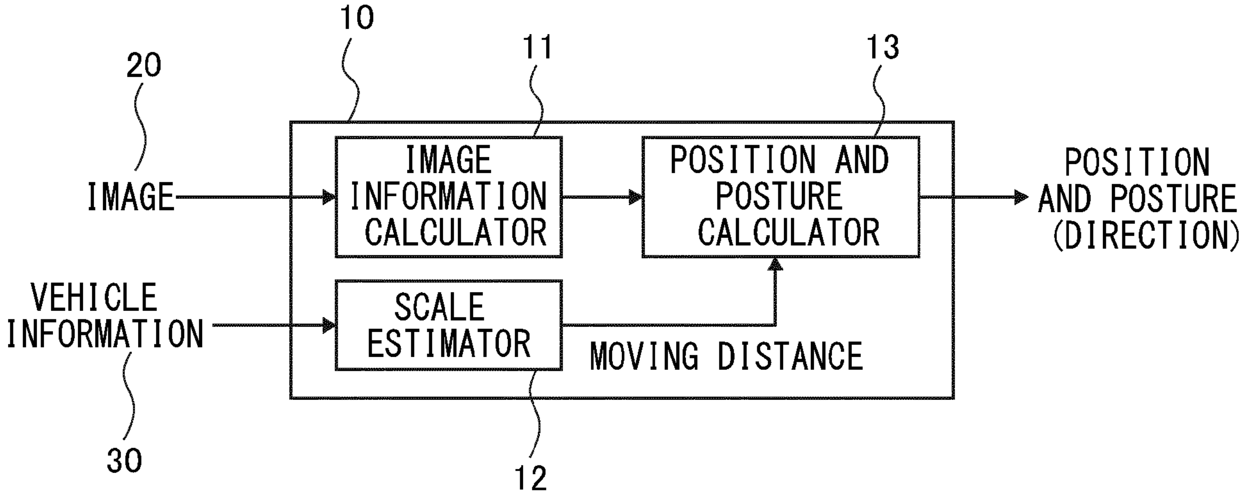
10
11
13
20
IMAGE
IMAGE INFORMATION CALCULATOR
POSITION AND POSTURE CALCULATOR
POSITION AND POSTURE (DIRECTION)
VEHICLE INFORMATION
SCALE ESTIMATOR
MOVING DISTANCE
30
12

FIG.2

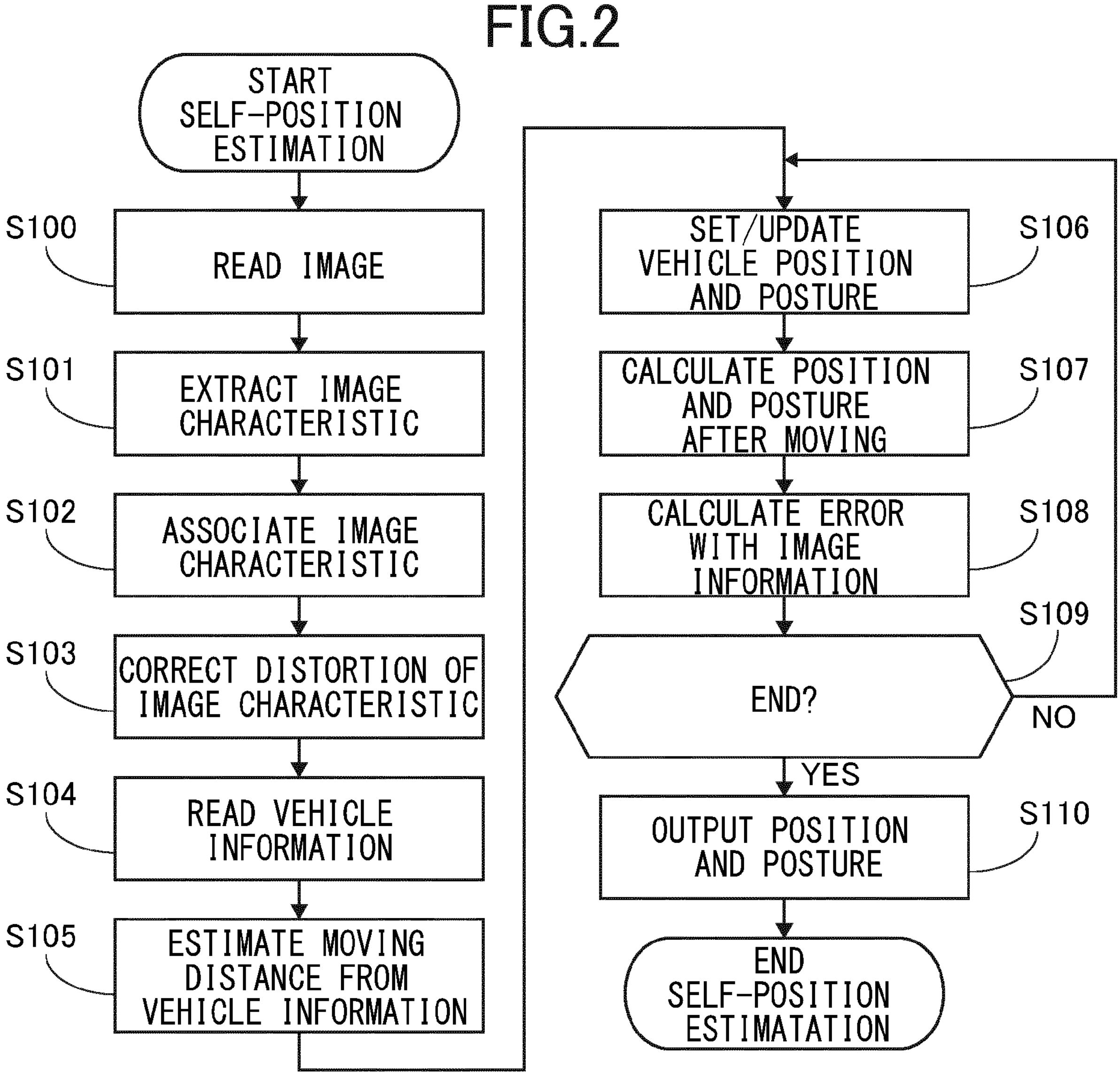
START SELF-POSITION ESTIMATION
S100
READ IMAGE
S101
EXTRACT IMAGE CHARACTERISTIC
S102
ASSOCIATE IMAGE CHARACTERISTIC
S103
CORRECT DISTORTION OF IMAGE CHARACTERISTIC
S104
READ VEHICLE INFORMATION
S105
ESTIMATE MOVING DISTANCE FROM VEHICLE INFORMATION
S106
SET/UPDATE VEHICLE POSITION AND POSTURE
S107
CALCULATE POSITION AND POSTURE AFTER MOVING
S108
CALCULATE ERROR WITH IMAGE INFORMATION
S109
END?
NO
YES
S110
OUTPUT POSITION AND POSTURE
END SELF-POSITION ESTIMATATION

FIG.3

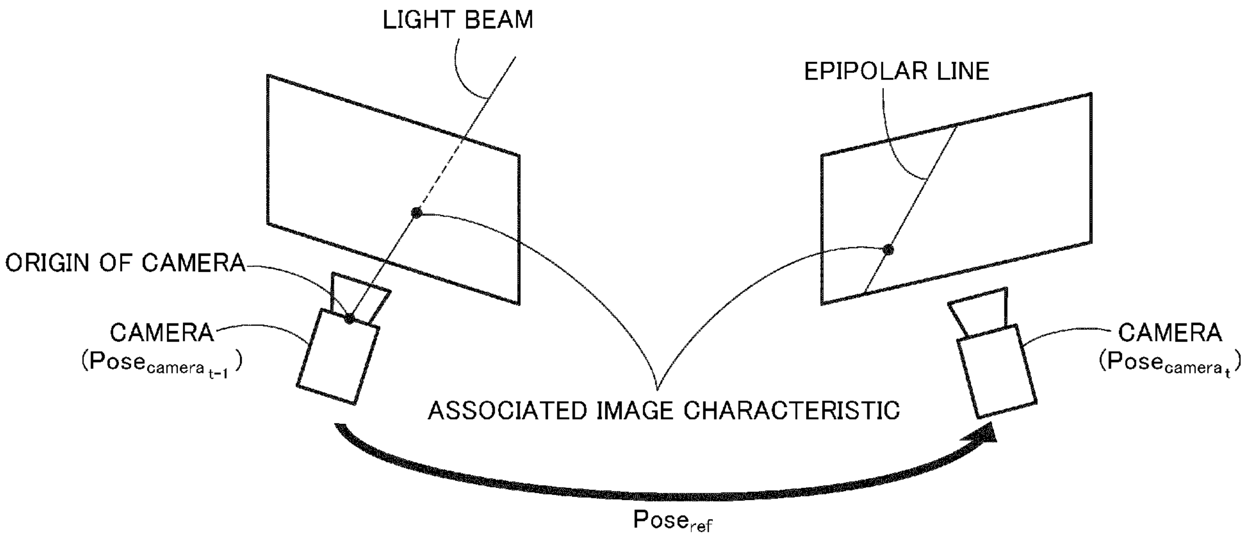
LIGHT BEAM
EPIPOLAR LINE
ORIGIN OF CAMERA
CAMERA
($Pose_{camera_{t-1}}$)
CAMERA
($Pose_{camera_t}$)
ASSOCIATED IMAGE CHARACTERISTIC
$Pose_{ref}$

FIG.4

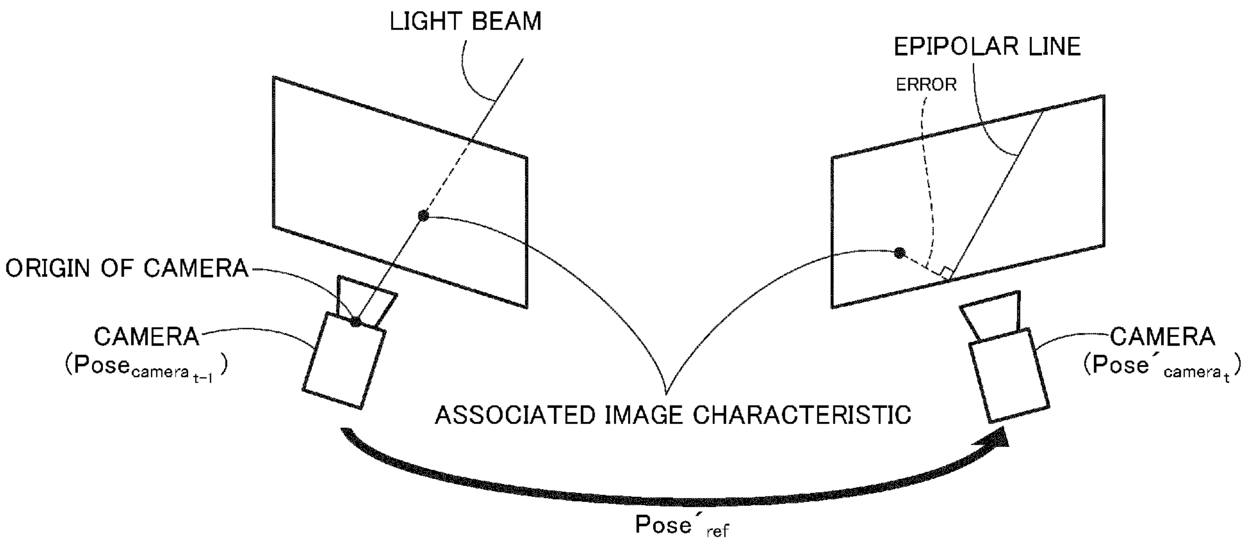
LIGHT BEAM
EPIPOLAR LINE
ERROR
ORIGIN OF CAMERA
CAMERA
(Pose camera t-1)
CAMERA
(Pose´ camera t)
ASSOCIATED IMAGE CHARACTERISTIC
Pose´ ref

FIG.5

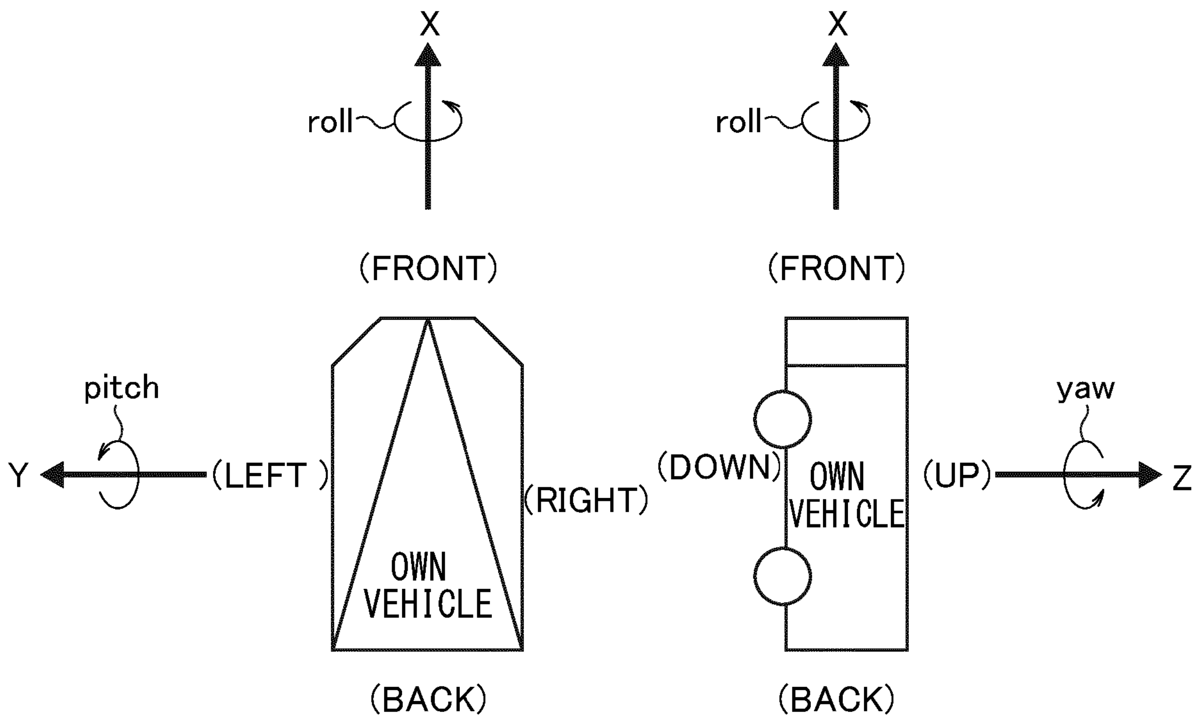
X
roll
X
roll
(FRONT)
(FRONT)
pitch
Y
(LEFT)
(RIGHT)
OWN VEHICLE
(DOWN)
OWN VEHICLE
(UP)
yaw
Z
(BACK)
(BACK)

FIG.6

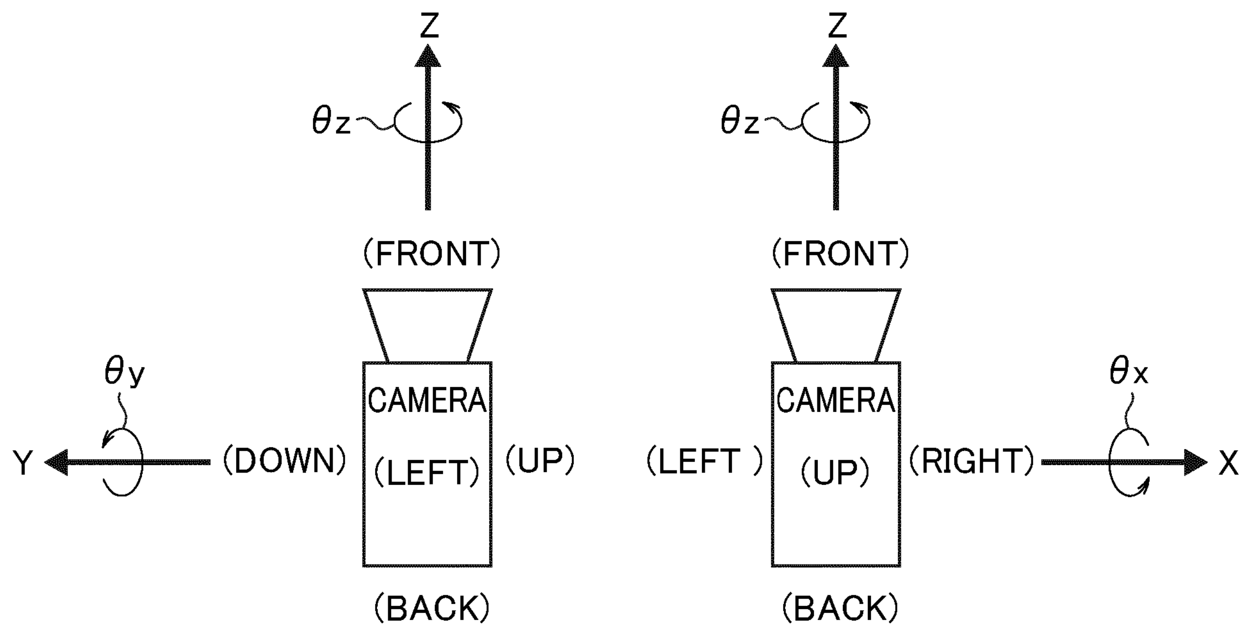
Z
θz
Z
θz
(FRONT)
(FRONT)
θy
Y
(DOWN)
CAMERA
(LEFT)
(UP)
(LEFT)
CAMERA
(UP)
(RIGHT)
θx
X
(BACK)
(BACK)

FIG.7

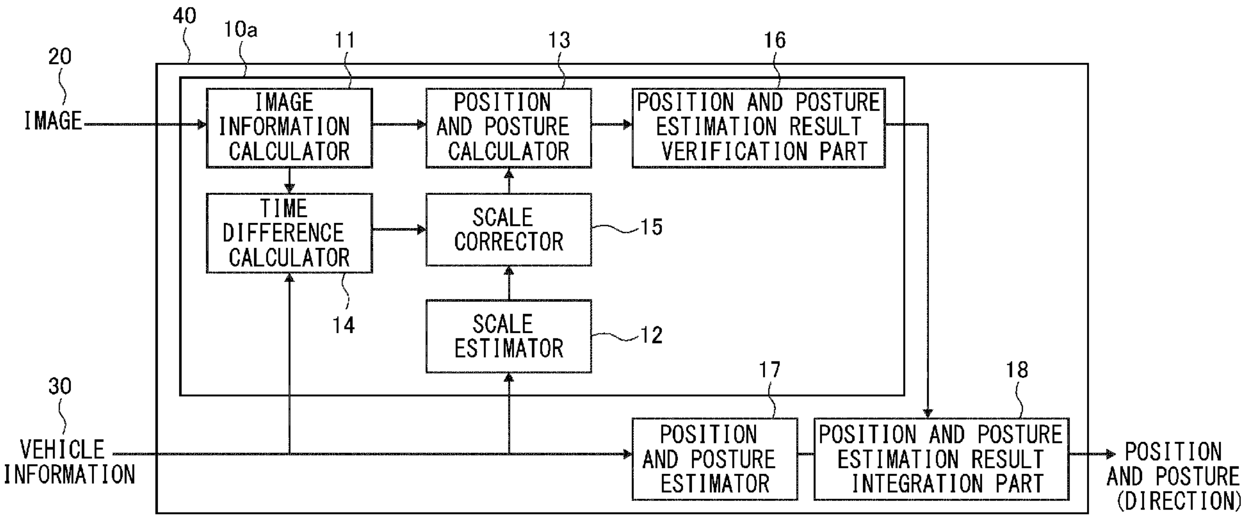
40
10a
11
13
16
20
IMAGE
IMAGE INFORMATION CALCULATOR
POSITION AND POSTURE CALCULATOR
POSITION AND POSTURE ESTIMATION RESULT VERIFICATION PART
TIME DIFFERENCE CALCULATOR
SCALE CORRECTOR
15
14
SCALE ESTIMATOR
12
30
17
18
VEHICLE INFORMATION
POSITION AND POSTURE ESTIMATOR
POSITION AND POSTURE ESTIMATION RESULT INTEGRATION PART
POSITION AND POSTURE (DIRECTION)

FIG.8

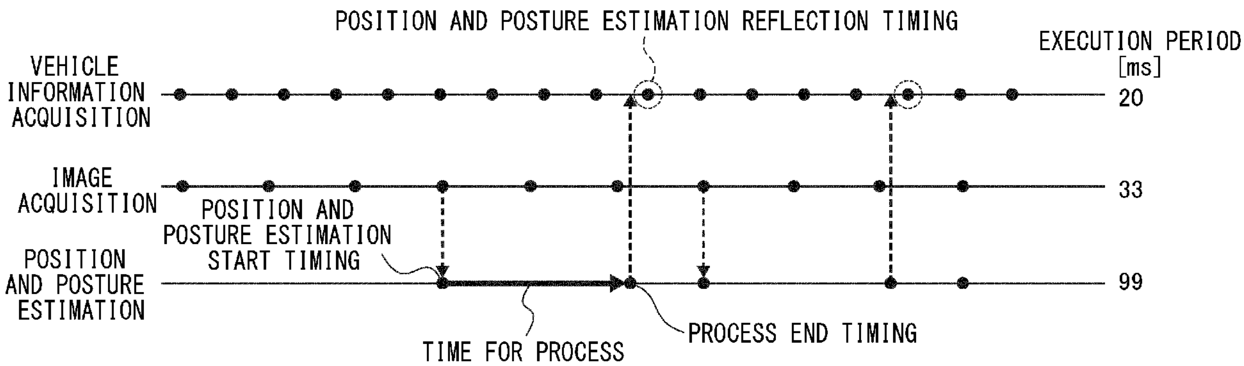
POSITION AND POSTURE ESTIMATION REFLECTION TIMING
EXECUTION PERIOD [ms]
VEHICLE INFORMATION ACQUISITION
20
IMAGE ACQUISITION
33
POSITION AND POSTURE ESTIMATION START TIMING
POSITION AND POSTURE ESTIMATION
99
TIME FOR PROCESS
PROCESS END TIMING

# FIG.9

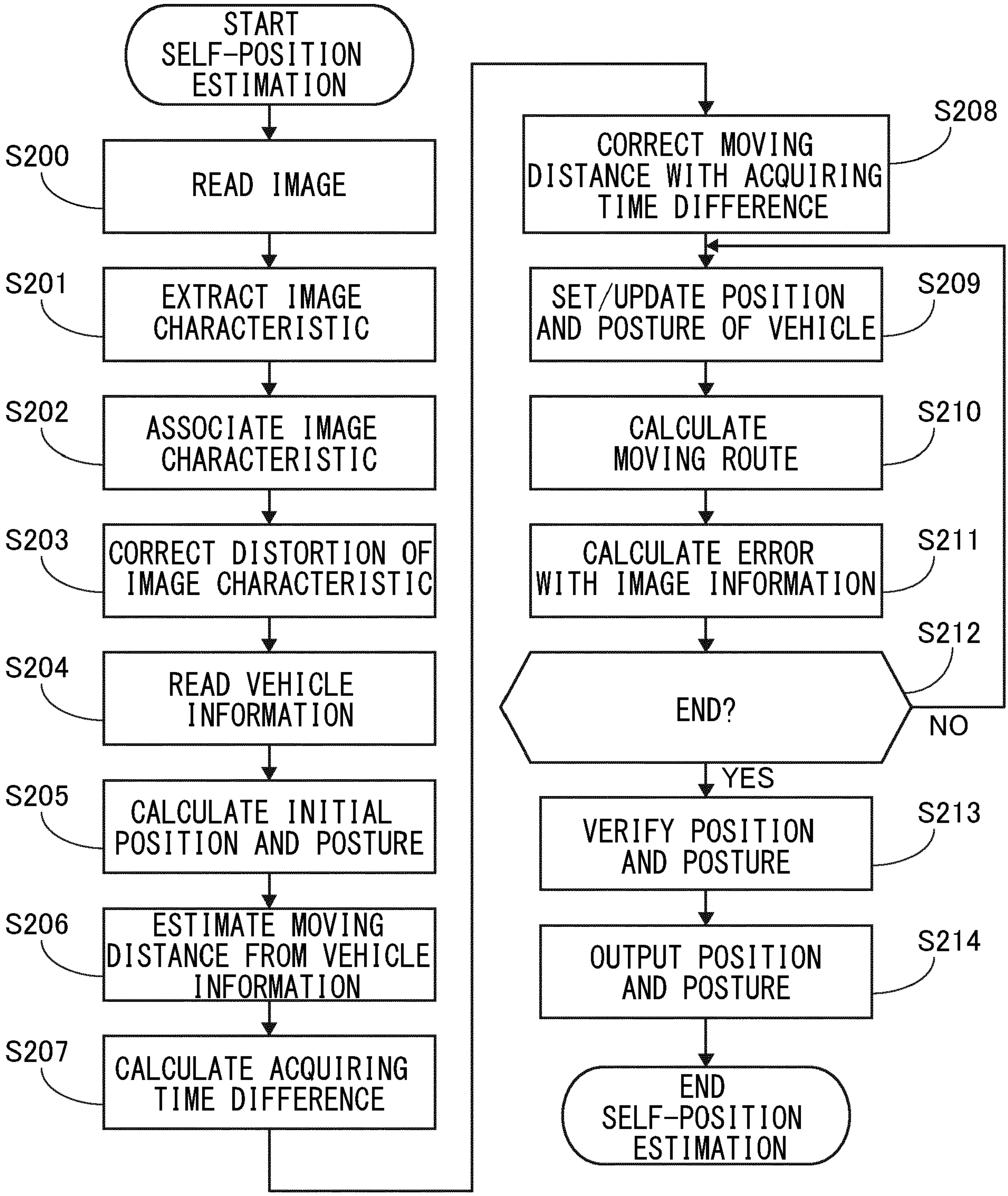
START SELF-POSITION ESTIMATION
S200
READ IMAGE
S201
EXTRACT IMAGE CHARACTERISTIC
S202
ASSOCIATE IMAGE CHARACTERISTIC
S203
CORRECT DISTORTION OF IMAGE CHARACTERISTIC
S204
READ VEHICLE INFORMATION
S205
CALCULATE INITIAL POSITION AND POSTURE
S206
ESTIMATE MOVING DISTANCE FROM VEHICLE INFORMATION
S207
CALCULATE ACQUIRING TIME DIFFERENCE
S208
CORRECT MOVING DISTANCE WITH ACQUIRING TIME DIFFERENCE
S209
SET/UPDATE POSITION AND POSTURE OF VEHICLE
S210
CALCULATE MOVING ROUTE
S211
CALCULATE ERROR WITH IMAGE INFORMATION
S212
END?
NO
YES
S213
VERIFY POSITION AND POSTURE
S214
OUTPUT POSITION AND POSTURE
END SELF-POSITION ESTIMATION

FIG.10

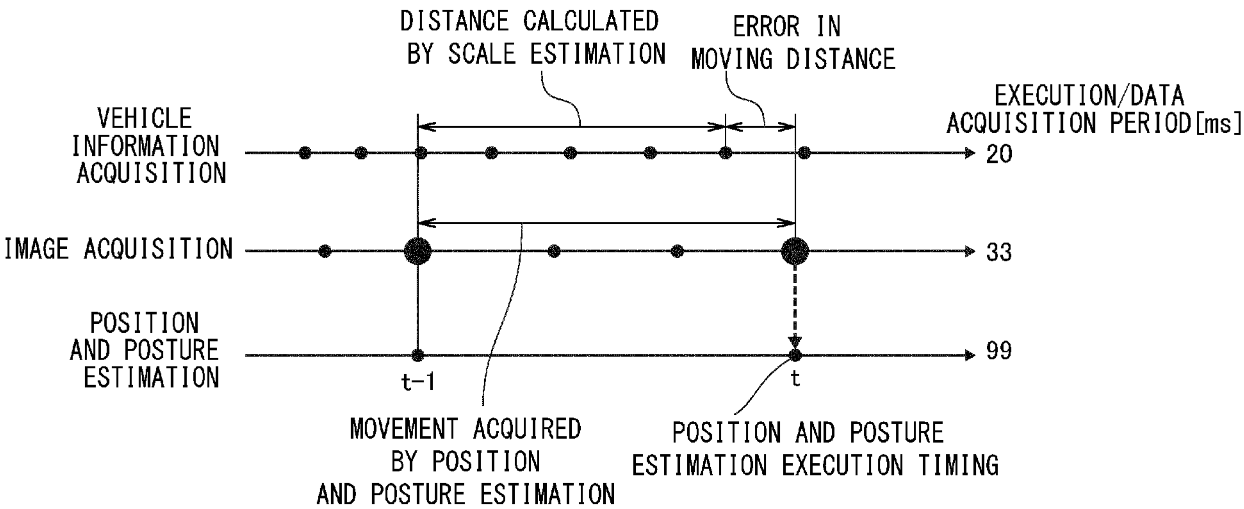
DISTANCE CALCULATED BY SCALE ESTIMATION
ERROR IN MOVING DISTANCE
EXECUTION/DATA ACQUISITION PERIOD[ms]
VEHICLE INFORMATION ACQUISITION
20
IMAGE ACQUISITION
33
POSITION AND POSTURE ESTIMATION
99
t-1
t
MOVEMENT ACQUIRED BY POSITION AND POSTURE ESTIMATION
POSITION AND POSTURE ESTIMATION EXECUTION TIMING

FIG.11

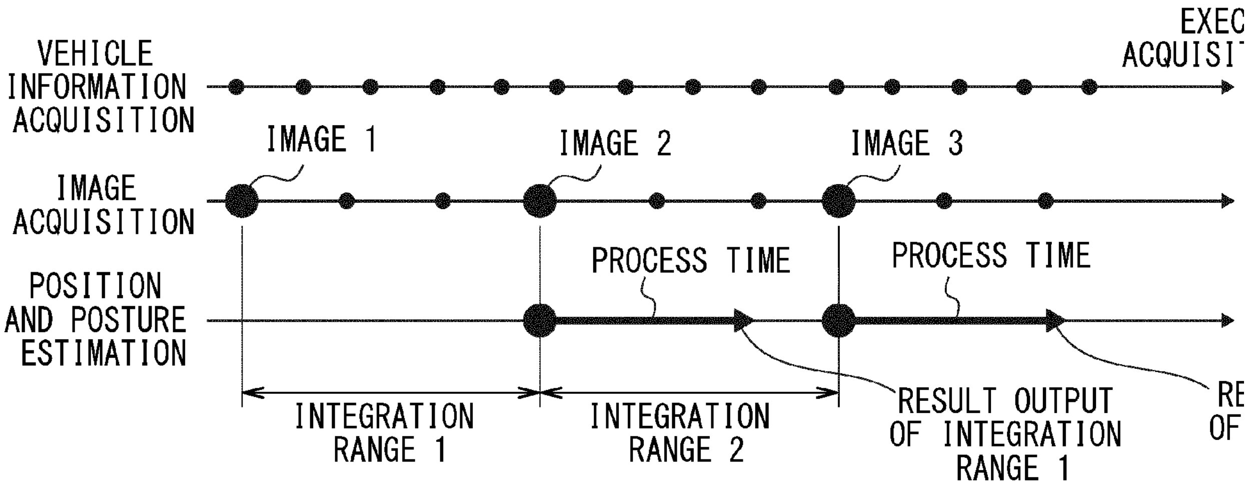
EXEC
ACQUISI
VEHICLE
INFORMATION
ACQUISITION
IMAGE 1
IMAGE 2
IMAGE 3
IMAGE
ACQUISITION
PROCESS TIME
PROCESS TIME
POSITION
AND POSTURE
ESTIMATION
INTEGRATION
RANGE 1
INTEGRATION
RANGE 2
RESULT OUTPUT
OF INTEGRATION
RANGE 1
RE
OF

Europäisches Patentamt
European Patent Office
Office européen des brevets

# EUROPEAN SEARCH REPORT

Application Number
EP 21 17 7853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A<br>L | JP 2020 052687 A (CLARION CO LTD)<br>2 April 2020 (2020-04-02)<br>* the whole document *<br>& EP 3 859 476 A1 (FAURECIA CLARION ELECTRONICS CO LTD [JP])<br>4 August 2021 (2021-08-04)<br>* paragraphs [0011] - [0015] *<br>----- | 1-3<br>4<br>1-4 | INV.<br>B60W30/06<br>G06T7/73<br>G06T7/246<br>G01C21/14<br>G01C21/28 |
| X,D<br>A | JP 2014 142241 A (DENSO CORP)<br>7 August 2014 (2014-08-07)<br>* paragraph [0022]; claim 1 *<br>----- | 1,2<br>3,4 | |
| X<br>A | US 2018/073891 A1 (MAX STEPHAN [DE] ET AL)<br>15 March 2018 (2018-03-15)<br>* paragraph [0010]; claims 10,11 *<br>----- | 1-3<br>4 | |

TECHNICAL FIELDS SEARCHED (IPC)

B60W
G06T
G01C

The present search report has been drawn up for all claims

| Place of search | Date of completion of the search | Examiner |
|---|---|---|
| The Hague | 1 November 2021 | Pascheka, Patrick |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 17 7853

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2021

| Patent document cited in search report | Publication date | Patent family member(s) | Publication date |
|---|---|---|---|
| JP 2020052687 A | 02-04-2020 | EP 3859476 A1 | 04-08-2021 |
| | | JP 2020052687 A | 02-04-2020 |
| | | WO 2020066069 A1 | 02-04-2020 |
| JP 2014142241 A | 07-08-2014 | JP 6003673 B2 | 05-10-2016 |
| | | JP 2014142241 A | 07-08-2014 |
| US 2018073891 A1 | 15-03-2018 | CN 107826168 A | 23-03-2018 |
| | | DE 102016217637 A1 | 15-03-2018 |
| | | US 2018073891 A1 | 15-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014142241 A